(19) Europäisches Patentamt
European Patent Office
Office européen des brevets

(11) EP 2 892 286 A1

(12) # EUROPEAN PATENT APPLICATION
published in accordance with Art. 153(4) EPC

(43) Date of publication:
**08.07.2015 Bulletin 2015/28**

(21) Application number: **13832910.7**

(22) Date of filing: **26.06.2013**

(51) Int Cl.:
***H04W 52/22*** *(2009.01)*

(86) International application number:
**PCT/JP2013/067515**

(87) International publication number:
**WO 2014/034243 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.08.2012 JP 2012189500**

(71) Applicant: **NTT DOCOMO, INC.**
**Chiyoda-ku**
**Tokyo 100-6150 (JP)**

(72) Inventor: **GOTO, Yoshikazu**
**Tokyo 100-6150 (JP)**

(74) Representative: **Maury, Richard Philip**
**Marks & Clerk LLP**
**90 Long Acre**
**London WC2E 9RA (GB)**

(54) **MOBILE STATION AND TRANSMISSION POWER DETERMINATION METHOD**

(57) A mobile station in accordance with one embodiment of the present invention includes a cumulative value storage unit configured to store a cumulative value of transmission power control commands transmitted from a base station; and a cumulative value addition unit configured to add the cumulative value stored in the cumulative value storage unit or a value calculated from the cumulative value to a predetermined initial value to calculate transmission power of a physical uplink shared channel or a physical uplink control channel, when uplink transmission power is initialized.

FIG.2

MOBILE STATION
TPC CONTROL INITIALIZATION
101
TPC CONTROL INITIALIZATION UNIT
103
TPC CUMULATIVE VALUE STORAGE UNIT
105
NON-COMMUNICATION INTERVAL MONITOR UNIT
107
TPC CUMULATIVE VALUE ADDITION UNIT
109
ADDED TPC CUMULATIVE VALUE TRANSMISSION UNIT
ADDED TPC CUMULATIVE VALUE

EP 2 892 286 A1

## Description

TECHNICAL FIELD

The present invention relates to a mobile station and a method of determining transmission power.

BACKGROUND ART

In an LTE (Long Term Evolution) mobile communication system, a mobile station (UE: User Equipment) controls transmission power of a PUSCH (Physical Uplink Shared Channel) or a PUCCH (Physical Uplink Control Channel) according to a TPC (Transmission Power Control) command from a base station (eNB: evolved Node B).

For example, transmission power $P_{PUSCH}$ (i) of the PUSCH and transmission power $P_{PUCCH}$(i) of the PUCCH are determined according to the following equations (see 3GPP TS 36.213, V10.6.0, 2012-06).

$$P_{PUSCH}(i)\ [dBm] = \min\{P_{CMAX},\ 10\log_{10}(M_{PUSCH}(i))+P_{O_PUSCH}(j)+\alpha(j)*PL+\Delta_{TF}(i)+f(i)\}$$

$$P_{PCCCH}(i)\ [dBm] = \min\{P_{CMAX},\ P_{0_PUCCH}+PL+h(n_{CQI},\ n_{HARQ})+\Delta_{F_PUCCH}(F)+g(i)\}$$

$P_{PUSCH}$ (i) is a transmission power value of the PUSCH in an i-th subframe, $P_{CMAX}$ is a maximum transmission power value, $M_{PUSCH}$(i) is the number of physical resource blocks for transmitting the PUSCH assigned in the i-th subframe, $P_{O_PUSCH}$ (j) is predetermined basic transmission power of the PUSCH, $\alpha$(j) is a coefficient by which a path loss is multiplied, PL is a path loss, $\Delta_{TF}$ (i) is an offset value determined based on a modulation scheme or the like, and f(i) is a cumulative value (cumulative sum) of TPC commands associated with the PUSCH which are transmitted from the base station.

$P_{PUCCH}$ (i) is a transmission power value of the PUCCH in an i-th subframe, $P_{O_PUCCH}$ is predetermined basic transmission power of the PUCCH, $n_{CQI}$ represents CQI (Channel Quality Information) of the PUCCH, $n_{HARQ}$ is the number of HARQ bits to be transmitted on the PUCCH, $\Delta_{F_PUCCH}$ (F) is an offset value specified for each format of the PUCCH, and g(i) is a cumulative value of TPC commands associated with the PUCCH which are transmitted from the base station.

### DISCLOSURE OF INVENTION

[PROBLEM(S) TO BE SOLVED BY THE INVENTION]

As described above, in an LTE mobile communication system, a mobile station determines transmission power using cumulative values f(i) and g(i) of TPC commands from a base station. In order to correct the difference between the cumulative value f(i) or g(i) recognized by the base station and the cumulative value f(i) or g(i) recognized by the mobile station, uplink transmission power is periodically initialized. For example, when reconfiguration or the like is triggered by an input from an operator in the base station or the like, uplink transmission power is initialized. In addition, when a mobile station initiates random access, uplink transmission power is initialized.

In such cases, f(i) and g(i) are reset to zero or a predetermined value, regardless of the level of uplink interference power. When uplink interference power is high, the initialized uplink transmission power becomes lower compared to the uplink interference power, which may cause degradation of uplink communication quality and a loss of a received signal. On the other hand, when uplink transmission power is low, the initialized uplink transmission power becomes higher compared to the uplink interference power, which causes an excessive amount of interference power at another mobile station.

It is a general object of the present invention to determine appropriate transmission power when uplink transmission power is initialized.

[MEANS FOR SOLVING THE PROBLEM(S)]

In one aspect of the present invention, there is provided a mobile station including:

a cumulative value storage unit configured to store a cumulative value of transmission power control commands transmitted from a base station; and
a cumulative value addition unit configured to add the cumulative value stored in the cumulative value storage unit or a value calculated from the cumulative value to a predetermined initial value to calculate transmission power of a physical uplink shared channel or a physical uplink control channel, when uplink transmission power is initialized.

In another aspect of the present invention, there is provided a method of determining transmission power of a physical uplink shared channel or a physical uplink control channel in a mobile station, comprising the steps of:

storing a cumulative value of transmission power control commands transmitted from a base station; and
adding the stored cumulative value or a value calculated from the cumulative value to a predetermined initial value to calculate transmission power of the physical uplink shared channel or the physical uplink control channel, when uplink transmission power is initialized.

[ADVANTAGEOUS EFFECT OF THE INVENTION]

According to the present invention, it is possible to improve uplink communication quality or to reduce interference power at another mobile station, when uplink transmission power is initialized.

## BRIEF DESCRIPTION OF THE DRAWINGS

Fig. 1 shows a diagram of uplink transmission power in an LTE mobile communication system.
Fig. 2 shows a block diagram of a mobile station in accordance with an embodiment of the present invention.
Fig. 3 shows a first flowchart of a method of determining transmission power in accordance with an embodiment of the present invention.
Fig. 4 shows a second flowchart of a method of determining transmission power in accordance with an embodiment of the present invention.
Fig. 5 shows a comparison between uplink transmission power in an LTE mobile communication system and uplink transmission power in a mobile station in accordance with an embodiment of the present invention.

## DETAILED DESCRIPTION OF THE PREFERRED EMBODIMENTS

An embodiment of the present invention is described below with reference to the accompanying drawings.
In an embodiment of the present invention, a mobile station stores a cumulative value of transmission power control commands transmitted from a base station. For example, a mobile station stores a cumulative value f(i) or g(i) of TPC commands transmitted from a base station. The mobile station determines transmission power by adding the stored cumulative value or a value calculated from the cumulative value to a predetermined initial value to calculate transmission power of a PUSCH or a PUCCH, when uplink transmission power is initialized.
For example, the mobile station determines transmission power $P_{PUSCH}$ (i) of the PUSCH and transmission power $P_{PUCCH}$ (i) of the PUCCH according to the following equations.

$$P_{PUSCH}(i)\ [dBm] = \min\{P_{CMAX},\ 10\log_{10}(M_{PUSCH}(i))+P_{O\ PUSCH}(j)+\alpha(j)*PL+\Delta_{TF}(i)+f(i)+A\} \quad (1)$$

$$P_{PCCCH}(i)\ [dBm] = \min\{P_{CMAX},\ P_{0_PUCCH}+PL+h(n_{CQI},\ n_{HARQ})+\Delta_{F_PUCCH}(F)+g(i)+B\} \quad (2)$$

As described above, $P_{PUSCH}$ (i) is a transmission power value of the PUSCH in an i-th subframe, $P_{CMAX}$ is a maximum transmission power value, $M_{PUSCH}$ (i) is the number of physical resource blocks for transmitting the PUSCH assigned in the i-th subframe, $P_{O_PUSCH}$ (j) is predetermined basic transmission power of the PUSCH, $\alpha$(j) is a coefficient by which a path loss is multiplied, PL is a path loss, $\Delta_{TF}$(i) is an offset value determined based on a modulation scheme or the like, f(i) is a cumulative value (cumulative sum) of TPC commands associated with the PUSCH which are transmitted from the base station, and A is the cumulative value of TPC commands associated with the PUSCH immediately before initialization or a value calculated from the cumulative value.

$P_{PUCCH}$ (i) is a transmission power value of the PUCCH in an i-th subframe, $P_{O_PUCCH}$ is predetermined basic transmission power of the PUCCH, $n_{CQI}$ represents CQI (Channel Quality Information) of the PUCCH, $n_{HARQ}$ is the number of HARQ bits to be transmitted on the PUCCH, $\Delta_{F_PUCCH}$ (F) is an offset value specified for each format of the PUCCH, g(i) is a cumulative value of TPC commands associated with the PUCCH which are transmitted from the base station, and B is the cumulative value of TPC commands associated with the PUCCH immediately before initialization or a value calculated from the cumulative value.

For example, A and B may be respectively the cumulative values of TPC commands immediately before initialization or values calculated by multiplying the cumulative values by any coefficient or by adding the cumulative values to any coefficient. It should be noted that A and B may be positive values or negative values.

As A is incorporated into $P_{PUSCH}$ (i) , power headroom is calculated according to the following equation.

$$PH(i) = P_{CMAX} - \{10\log_{10}(M_{PUSCH}(i)) + P_{O_PUSCH}(j) + \alpha(j) * PL + \Delta_{TF}(i) + f(i) + A\} \quad (3)$$

A configuration and an operation of a mobile station in accordance with an embodiment of the present invention are described in detail below.

<Configuration of Mobile Station>

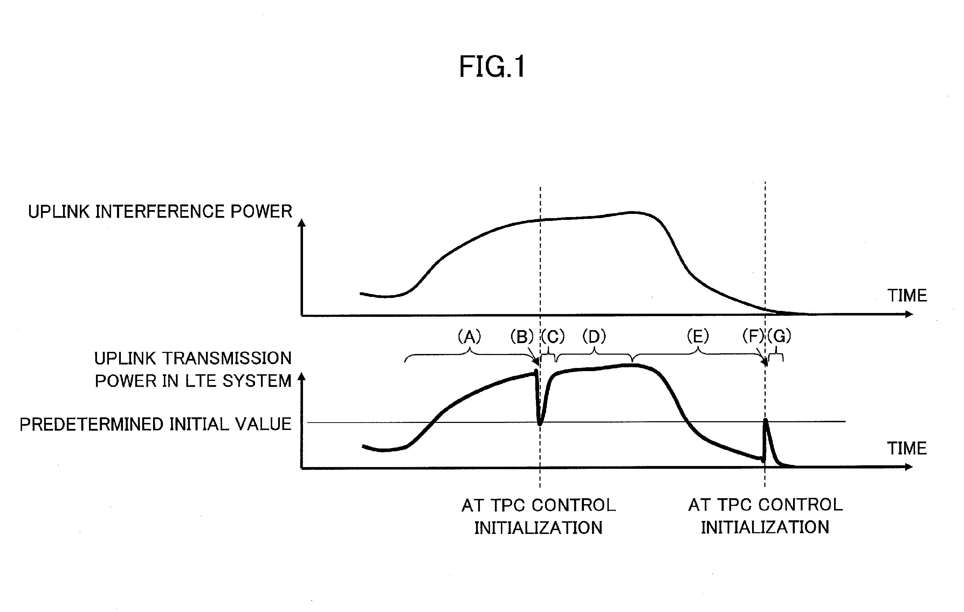

Before describing a mobile station in accordance with an embodiment of the present invention, uplink transmission power control in an LTE mobile communication system is described below with reference to Fig. 1.

In an LTE mobile communication system, uplink transmission power is controlled according to a TPC command from a base station, as described above. During the period (A), when uplink interference power is high, the base station increases f(i) and g(i) using a TPC command. At the point (B), f(i) and g(i) are reset by intentional reconfiguration in the base station or random access in a mobile station. When f(i) and g(i) are reset while uplink interference power is high, initialized uplink transmission power becomes lower compared to the uplink interference power. Thus, during the period (C), the base station increases f(i) and g(i) using a TPC command. During the period (D), when the uplink interference is higher, the base station further increases f(i) and g(i) using a TPC command. On the other hand, during the period (E), when uplink interference power is lower, the base station decreases f(i) and g(i) using a TPC command. At the point (F), f(i) and g(i) are reset by intentional reconfiguration in the base station or random access in the mobile station. When f(i) and g(i) are reset while uplink interference power is low, initialized uplink transmission power becomes higher compared to the uplink interference power. Thus, during the period (G), the base station decreases f(i) and g(i) using a TPC command.

In the following embodiment of the present invention, a mobile station is described which can appropriately determine transmission power of a PUSCH and a PUCCH, when f(i) and g(i) are reset as shown at the point (B) or (F) in Fig. 1.

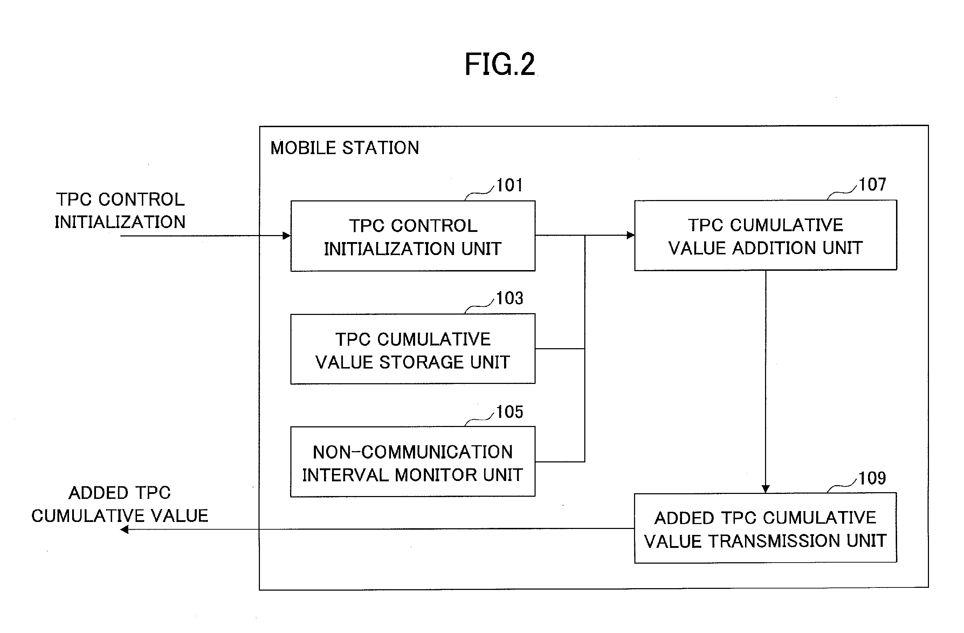

Fig. 2 shows a block diagram of a mobile station in accordance with an embodiment of the present invention. The mobile station includes a TPC control initialization unit 101, a TPC cumulative value storage unit 103, and a TPC cumulative value addition unit 107. The mobile station may further include a non-communication interval monitor unit 105 and an added TPC cumulative value transmission unit 109. The mobile station also includes a reception unit (not shown) to receive a TPC command from a base station.

The TPC control initialization unit 101 initializes uplink transmission power, when initialization of transmission power is ordered by the base station or when the mobile station initiates random access. For example, the initialization of uplink transmission power is intentionally ordered by the base station during a sequence of reconfiguration in the base station or the like. For example, the TPC control initialization unit 101 resets f(i) and g(i) in the equations (1) and (2) to zero or a predetermined value. The initialization of uplink transmission power is hereinafter referred to as "TPC control initialization".

The TPC cumulative value storage unit 103 stores a cumulative value of transmission power control commands transmitted from the base station. For example, the TPC cumulative value storage unit 103 stores the cumulative values f(i) and g(i) of TPC commands in the equations (1) and (2) immediately before initialization.

The non-communication interval monitor unit 105 monitors a non-communication interval of the PUSCH or the PUCCH. The non-communication interval may be a duration during which a signal is not transmitted from the mobile station on the PUSCH or the PUCCH. Alternatively, the non-communication interval may be a duration during which a TPC command is not updated (or received) in the mobile station. The non-communication interval is monitored for the purpose of preventing erroneous recognition caused by old information, which does not reflect the current state, about the cumulative value of TPC commands immediately before initialization.

The TPC cumulative value addition unit 107 adds the cumulative value stored in the TPC cumulative value storage unit 103 or a value calculated from the cumulative value to a predetermined initial value to calculate transmission power of the PUSCH or the PUCCH, when uplink transmission power is initialized. For example, the TPC cumulative value addition unit 107 respectively adds A and B in the equations (1) and (2). As described above, for the purpose of preventing erroneous recognition caused by not reflecting the current state, when the non-communication interval monitored by the non-communication interval monitor unit 105 is shorter than a predetermined threshold, the TPC cumulative value addition unit 107 may add the cumulative value stored in the TPC cumulative value storage unit 103 or a value calculated from the cumulative value to the predetermined initial value. In other words, when the non-communication interval monitored by the non-communication interval monitor unit 105 is equal to or longer than the predetermined threshold, the TPC cumulative value addition unit 107 may not add the cumulative value stored in the TPC cumulative value storage unit 103 or a value calculated from the cumulative value to the predetermined initial value.

The added TPC cumulative value transmission unit 109 transmits to the base station the value (for example, A or B) added by the TPC cumulative value addition unit 107. The value added by the TPC cumulative value addition unit 107 may be used to calculate a path loss in the base station. Thus, the added TPC cumulative value transmission unit 109 may transmit a path loss in itself rather than the value added by the TPC cumulative value addition unit 107. The value added by the TPC cumulative value addition unit 107 or the path loss may be transmitted via a RRC (Radio Resource Control) message.

<Operation of Mobile Station>

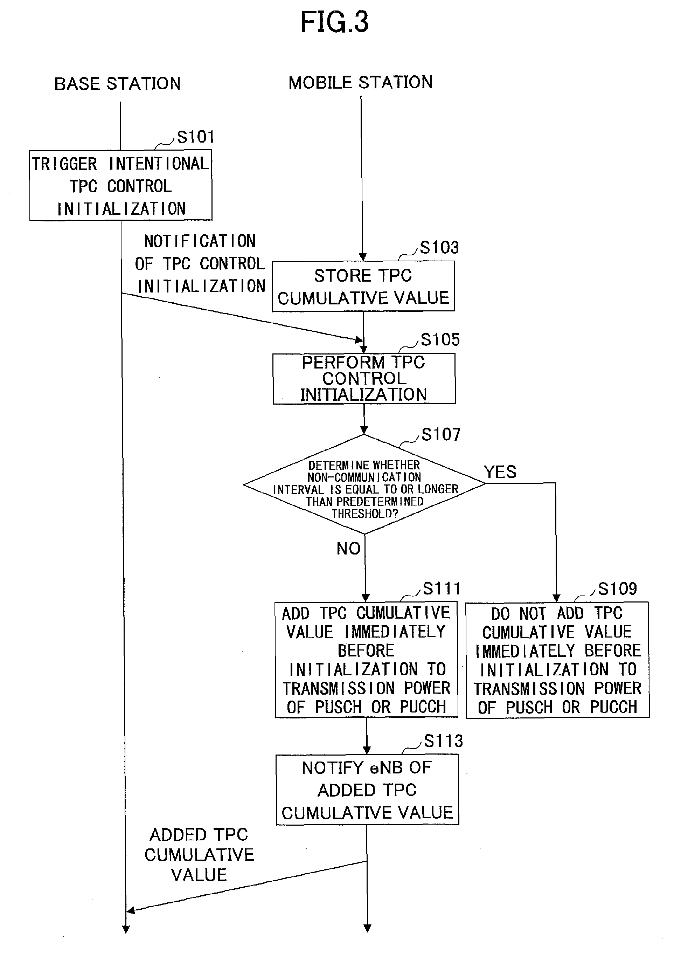

Fig. 3 shows a flowchart of a method of determining transmission power when initialization of transmission power is intentionally ordered by a base station in accordance with an embodiment of the present invention.

When TPC control initialization is intentionally ordered by a base station during a sequence of reconfiguration in the base station or the like (S101), the base station notifies a mobile station of the TPC control initialization. The mobile station stores a cumulative value of TPC commands (S103). Upon the TPC control initialization from the base station, the mobile station initializes uplink transmission power (S105). For example, the mobile station resets f(i) and g(i) in the equations (1) and (2).

Then, the mobile station determines whether a non-communication interval is equal to or longer than a predetermined threshold (S107). When the non-communication interval is equal to or longer than the predetermined threshold, the mobile station does not add the cumulative value of TPC commands immediately before initialization to transmission power of a PUSCH or a PUCCH, for the purpose of preventing erroneous recognition caused by not reflecting the current state (S109). When the non-communication interval is shorter than the predetermined threshold, the mobile station adds the cumulative value of TPC commands immediately before initialization or a value calculated from the cumulative value to transmission power of the PUSCH or the PUCCH (S111). For example, the mobile station respectively adds A and B in the equations (1) and (2). Then, the mobile station transmits the added value to the base station (S113).

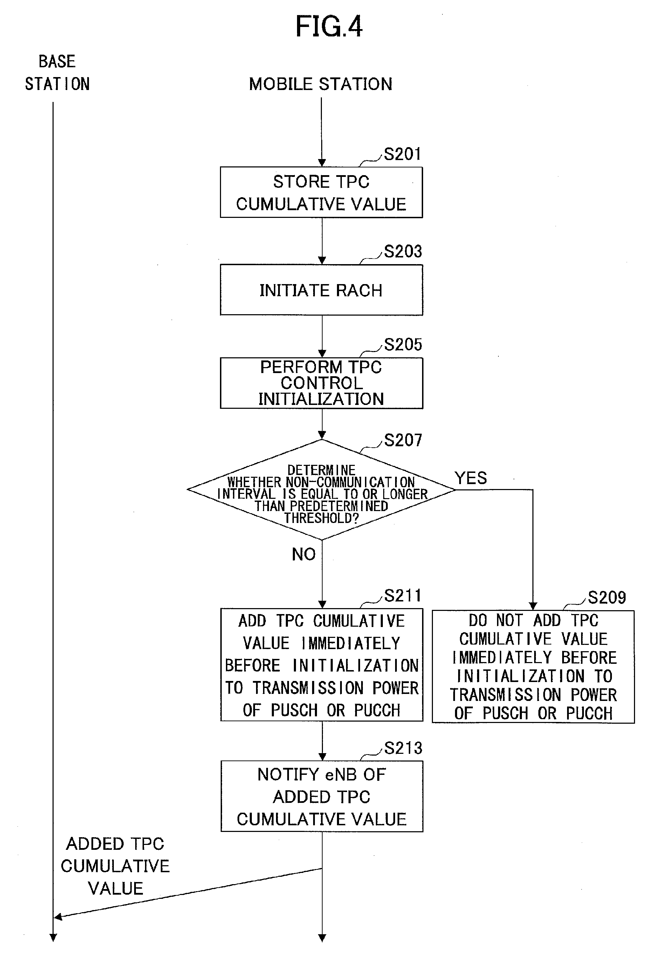

Fig. 4 shows a flowchart of a method of determining transmission power when initialization of transmission power is triggered by random access in a mobile station in accordance with an embodiment of the present invention.

A mobile station stores a cumulative value of TPC commands (S201). When traffic arises, the mobile station initiates random access (S203). Upon the initiation of random access, the mobile station initializes uplink transmission power (S205). For example, the mobile station resets f(i) and g(i) in the equations (1) and (2).

The subsequent steps S207-S213 are performed in the same manner as the steps S107-S113 shown in Fig. 3.

For convenience of explanation, the mobile station according to the embodiments of the present invention has been described with reference to functional block diagrams, but the mobile station may be implemented in hardware, software, or combinations thereof. In addition, two or more functional elements may be combined as appropriate.

For convenience of explanation, the method according to the embodiments of the present invention has been described with reference to flowcharts, but the method may be carried out in a different order from the order shown in the embodiments.

<Effects of Embodiments>

According to an embodiment of the present invention, it is possible to determine appropriate transmission power when uplink transmission power is initialized. As a result, uplink communication quality can be improved or interference power at another mobile station can be reduced.

More specifically, according to an embodiment of the present invention, transmission power appropriately set for uplink interference power immediately before initialization can be determined by using a cumulative value of TPC commands immediately before initialization.

In addition, by monitoring a non-communication interval, it is possible to prevent erroneous recognition caused by old information, which does not reflect the current state, about the cumulative value of TPC commands immediately before initialization.

Furthermore, by transmitting the values (A and B) added in a mobile station or a path loss to a base station, it is possible for the base station to perform scheduling such as appropriate determination of adaptive modulation and coding.

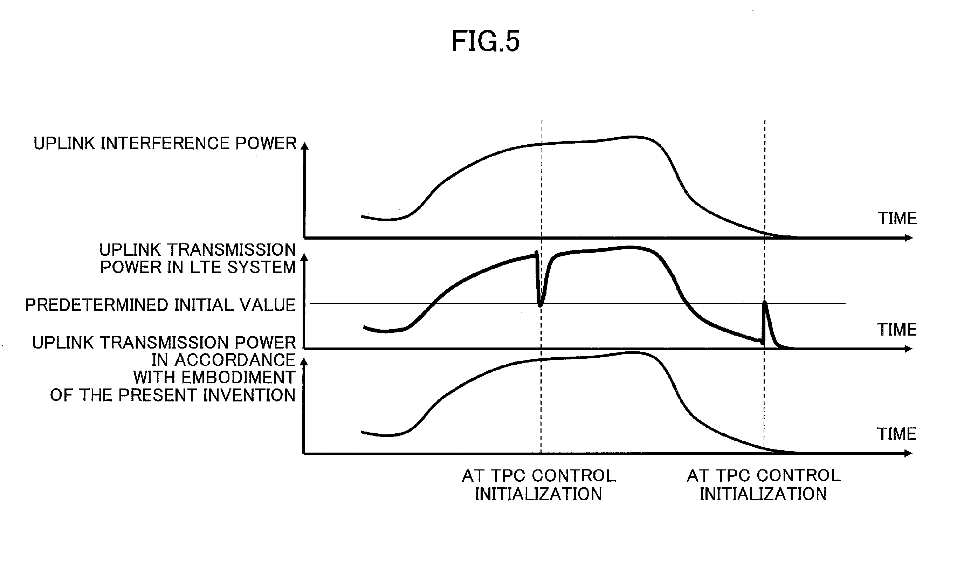

Fig. 5 shows a comparison between uplink transmission power in an LTE mobile communication system and uplink transmission power in a mobile station in accordance with an embodiment of the present invention.

In an LTE mobile communication system, when uplink transmission power is initialized as shown at the point (B) or (F), degradation of uplink communication quality or an excessive amount of interference power at another mobile station may occur. According to an embodiment of the present invention, on the other hand, by using a cumulative value of TPC commands immediately before initialization or a value calculated by multiplying the cumulative value by any coefficient or by adding the cumulative value to any coefficient (by using A and B, for example), it is possible to avoid degradation of uplink communication quality or an excessive amount of interference power at another mobile station when transmission power is initialized.

While the mobile station and the method of determining appropriate transmission power when uplink transmission power is initialized are described above, the present invention is not limited to the these embodiments, and variations, modifications, alterations, and substitutions can be made by those skilled in the art without deviating from the spirit of the present invention.

The present international application is based on and claims the benefit of priority of Japanese Patent Application No. 2012-189500 filed on August 30, 2012, the entire contents of which are hereby incorporated by reference.

[DESCRIPTION OF NOTATIONS]

101 TPC control initialization unit
103 TPC cumulative value storage unit
105 non-communication interval monitor unit
107 TPC cumulative value addition unit
109 added TPC cumulative value transmission unit

## Claims

**1.** A mobile station comprising:

a cumulative value storage unit configured to store a cumulative value of transmission power control commands transmitted from a base station; and
a cumulative value addition unit configured to add the cumulative value stored in the cumulative value storage unit or a value calculated from the cumulative value to a predetermined initial value to calculate transmission power of a physical uplink shared channel or a physical uplink control channel, when uplink transmission power is initialized.

**2.** The mobile station as claimed in claim 1, further comprising:

a non-communication interval monitor unit configured to monitor a non-communication interval of the physical uplink shared channel or the physical uplink control channel,
wherein the cumulative value addition unit adds the cumulative value stored in the cumulative value storage unit or the value calculated from the cumulative value to the predetermined initial value, when the non-communication interval monitored by the non-communication interval monitor unit is shorter than a predetermined threshold.

**3.** The mobile station as claimed in claim 1, further comprising:

an addition value transmission unit configured to transmit to the base station the value added by the cumulative value addition unit.

**4.** The mobile station as claimed in claim 1, further comprising:

a transmission power control initialization unit configured to initialize the uplink transmission power, when initialization of transmission power is ordered by the base station or when the mobile station initiates random access.

**5.** A method of determining transmission power of a physical uplink shared channel or a physical uplink control channel in a mobile station, comprising the steps of:

storing a cumulative value of transmission power control commands transmitted from a base station; and
adding the stored cumulative value or a value calculated from the cumulative value to a predetermined initial value to calculate transmission power of the physical uplink shared channel or the physical uplink control channel, when uplink transmission power is initialized.

FIG.1

UPLINK INTERFERENCE POWER
TIME
UPLINK TRANSMISSION POWER IN LTE SYSTEM
PREDETERMINED INITIAL VALUE
TIME
(A)
(B)
(C)
(D)
(E)
(F)
(G)
AT TPC CONTROL INITIALIZATION
AT TPC CONTROL INITIALIZATION

FIG.2

MOBILE STATION
101
TPC CONTROL INITIALIZATION UNIT
103
TPC CUMULATIVE VALUE STORAGE UNIT
105
NON-COMMUNICATION INTERVAL MONITOR UNIT
107
TPC CUMULATIVE VALUE ADDITION UNIT
109
ADDED TPC CUMULATIVE VALUE TRANSMISSION UNIT
TPC CONTROL INITIALIZATION
ADDED TPC CUMULATIVE VALUE

# FIG.3

BASE STATION
MOBILE STATION
S101
TRIGGER INTENTIONAL TPC CONTROL INITIALIZATION
NOTIFICATION OF TPC CONTROL INITIALIZATION
S103
STORE TPC CUMULATIVE VALUE
S105
PERFORM TPC CONTROL INITIALIZATION
S107
DETERMINE WHETHER NON-COMMUNICATION INTERVAL IS EQUAL TO OR LONGER THAN PREDETERMINED THRESHOLD?
YES
NO
S111
ADD TPC CUMULATIVE VALUE IMMEDIATELY BEFORE INITIALIZATION TO TRANSMISSION POWER OF PUSCH OR PUCCH
S109
DO NOT ADD TPC CUMULATIVE VALUE IMMEDIATELY BEFORE INITIALIZATION TO TRANSMISSION POWER OF PUSCH OR PUCCH
S113
NOTIFY eNB OF ADDED TPC CUMULATIVE VALUE
ADDED TPC CUMULATIVE VALUE

FIG.4
BASE STATION
MOBILE STATION
S201
STORE TPC CUMULATIVE VALUE
S203
INITIATE RACH
S205
PERFORM TPC CONTROL INITIALIZATION
S207
DETERMINE WHETHER NON-COMMUNICATION INTERVAL IS EQUAL TO OR LONGER THAN PREDETERMINED THRESHOLD?
YES
NO
S211
ADD TPC CUMULATIVE VALUE IMMEDIATELY BEFORE INITIALIZATION TO TRANSMISSION POWER OF PUSCH OR PUCCH
S209
DO NOT ADD TPC CUMULATIVE VALUE IMMEDIATELY BEFORE INITIALIZATION TO TRANSMISSION POWER OF PUSCH OR PUCCH
S213
NOTIFY eNB OF ADDED TPC CUMULATIVE VALUE
ADDED TPC CUMULATIVE VALUE

FIG.5
UPLINK INTERFERENCE POWER
UPLINK TRANSMISSION POWER IN LTE SYSTEM
PREDETERMINED INITIAL VALUE
UPLINK TRANSMISSION POWER IN ACCORDANCE WITH EMBODIMENT OF THE PRESENT INVENTION
TIME
TIME
TIME
AT TPC CONTROL INITIALIZATION
AT TPC CONTROL INITIALIZATION

**INTERNATIONAL SEARCH REPORT**

International application No. PCT/JP2013/067515

A. CLASSIFICATION OF SUBJECT MATTER
*H04W52/22*(2009.01)i

According to International Patent Classification (IPC) or to both national classification and IPC

B. FIELDS SEARCHED

Minimum documentation searched (classification system followed by classification symbols)
H04W52/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-130058 A (NEC Corp.), 30 June 2011 (30.06.2011), paragraphs [0027] to [0028], [0048] (Family: none) | 1-5 |
| A | JP 2004-193851 A (NEC Corp.), 08 July 2004 (08.07.2004), paragraph [0029]; fig. 2 (Family: none) | 1-5 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 16 July, 2013 (16.07.13) | 30 July, 2013 (30.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012189500 A


### Non-patent literature cited in the description


- *3GPP TS 36.213,* June 2012